(19) Europäisches Patentamt
European Patent Office
Office européen des brevets

(11) EP 0 335 245 B1

(12) EUROPEAN PATENT SPECIFICATION

(45) Date of publication and mention
of the grant of the patent:
10.12.1997 Bulletin 1997/50

(51) Int Cl.⁶: H04N 9/29

(21) Application number: 89105129.4

(22) Date of filing: 22.03.1989

(54) **A method of degaussing color cathode ray tube**

Verfahren zur Entmagnetisierung einer Farbkathodenstrahlröhre

Méthode de démagnétisation d'un tube cathodique couleur

(84) Designated Contracting States:
DE FR GB

(30) Priority: 28.03.1988 JP 71841/88

(43) Date of publication of application:
04.10.1989 Bulletin 1989/40

(73) Proprietor: KABUSHIKI KAISHA TOSHIBA
Kawasaki-shi, Kanagawa-ken 210 (JP)

(72) Inventors:
• Tokita, Kiyoshi c/o Patent Division
Minato-ku Tokyo 105 (JP)
• Hasegawa, Tetsuo c/o Patent Division
Minato-ku Tokyo 105 (JP)
• Inoue, Masatsugu c/o Patent Division
Minato-ku Tokyo 105 (JP)
• Nakane, Kazunori c/o Patent Division
Minato-ku Tokyo 105 (JP)

(74) Representative: Henkel, Feiler, Hänzel & Partner
Möhlstrasse 37
81675 München (DE)

(56) References cited:
EP-A- 0 219 287          GB-A- 1 499 663
US-A- 4 441 052

• Basic Television and Video Systems, fifth ed.,
McGraw Hill 1984, pp.107 to 108, Chapter 5-2
"Degaussing Colour Picture Tubes"

## Description

The present invention relates to a color cathode ray tube and more particularly, it relates to method of degaussing the color cathode ray tube of the shadow mask type.

The color cathode ray tube of the shadow mask type includes a panel section provided with a substantially rectangular face plate and a skirt projected backward from the face plate, a funnel section connected to the panel section, and a neck section continuous from the funnel section. By these three sections, the interior of the color cathode ray tube is airtightly closed and kept under vacuum. An electron gun assembly for generating electron beams is housed in the neck. A deflection yoke for generating magnetic field is located on the funnel and neck. A degaussing coil for degaussing magnetized parts or components of the tube is also located on the funnel. A phosphor screen is formed on the inner face of the face plate at the panel. A substantially rectangular shadow mask is arranged in the tube, facing the phosphor screen with a certain interval interposed relative to the face plate. The shadow mask is made by a thin metal plate and has a plurality of slits. A mask frame is located round the shadow mask. Plural mask supports, elastically deformable, are welded to the mask frame. Plural stud pins which are engaged with the mask supports are arranged on the inner face of the skirt at the panel section. An inner magnetic shield is attached to the mask frame on the side of the neck to prevent magnetic field outside such as earth magnetism from acting on the electron beams emitted from the electron gun assembly.

In the case of the color cathode ray tube of the shadow mask type, the three electron beams emitted from the electron gun assembly are deflected to horizontal and vertical directions by a magnetic field generated by the deflection yoke and then are converged upon the slits of the shadow mask. The electron beams converged upon the slits of the shadow mask are landed onto the phosphor screen of the face plate at the panel section. The phosphor screen has three kinds of fluorescent stripes which are alternately arranged to form the phosphor screen. When these fluorescent stripes are shot by the three electron beams passing through the slits of the shadow mask, they emit lights of three colors red, green and blue. In short, the slits of the shadow mask serve to direct the three electron beams to their corresponding fluorescent stripes which emit the lights of red, green and blue.

In the case of the color cathode ray tube, its shadow mask, mask frame, inner magnetic shield and the like are usually made of magnetic material such as low carbon steel. When they are magnetized by outside magnetism such as earth magnetism, therefore, their remnant magnetism shifts paths of the electron beams. When the paths of the electron beams are shifted in this manner, the electron beams cannot be landed correctly onto the phosphor screen. The color purity in the color cathode ray tube is thus reduced. This makes it necessary to demagnetize their remanent magnetism to prevent the color purity from being reduced.

Conventionally, magnetized parts or components of the color cathode ray tube are demagnetized by the degaussing coil wound on the outer surface of the funnel section in the following three cases.

1) When the property of a color cathode ray tube completed in the course of manufacturing color cathode ray tubes is tested.
2) When the performance of a completed television set in which the color cathode ray tube and other components have been incorporated in the course of manufacturing television sets is tested.
3) Whenever the television set which is usually in use is switched on.

In the case of testing the property of the color cathode ray tube, the color purity is measured as a point to evaluate the quality of image. This color purity is measured after remanent magnetism is degaussed according to the method which will be described later. In another case of incorporating the color cathode ray tube and other components to form the completed television set, remanent magnetism is demagnetized to color-adjust the color cathode ray tube.

Document US-A-4,737,881 uses a resonance circuit to degauss the remnant magnetism of magnetic components. Frequency (f) of degaussing current flowing through the resonance circuit is denoted by $f = 1/2\pi\sqrt{LC}$ wherein L represents inductance and C capacitance. The inductance of a degaussing coil used in this resonance circuit is several mH (millihenries) and the capacitance of a condenser is several uF (microfarads). The frequency of degaussing current flowing through the resonance circuit becomes several ten kHZ, accordingly. Energy (E) of the degaussing magnetic field is denoted by $E \propto 2\pi\sqrt{LC} = 1/f$ and energy (E) is therefore inversely proportional to frequency. In other words, degaussing energy (E) becomes smaller and smaller as frequency (f) of degaussing current becomes higher and higher. When frequency (f) becomes high, therefore, magnetized components cannot be sufficiently degaussed by the degaussing means.

There is well known a resonance circuit which can oscillate a frequency lower than 100 Hz. This resonance circuit needs a condenser having capacitance (C) of several F (farads) and a coil having inductance (L) of several H (henries) to oscillate the frequency lower than 100 Hz. This causes the resonance circuit to become larger in size than the common one used for the color cathode ray tube and its cost to become ten times that of the common one. Therefore, the resonance circuit cannot be practical.

When the resonance circuit which can oscillate the frequency of several ten kHz is used to demagnetize the remnant magnetism of parts of the color cathode ray tube, therefore, its degaussing energy is small because the frequency of its degaussing current is quite high. The magnetized parts cannot be sufficiently demagnetized by this resonance circuit, accordingly. When the frequency of degaussing magnetic field is compared with that of vertically deflecting magnetic field generated by the deflection yoke, the latter is lower than the former. When degaussing and vertically deflecting magnetic fields are applied to the magnetized components of the tube at the same time, therefore, it becomes more difficult for the magnetized components to be demagnetized because energy of vertically deflecting magnetic field is higher than that of degaussing magnetic field. This makes it necessary to use a delay circuit intended to flow deflecting current after the magnetized components are demagnetized.

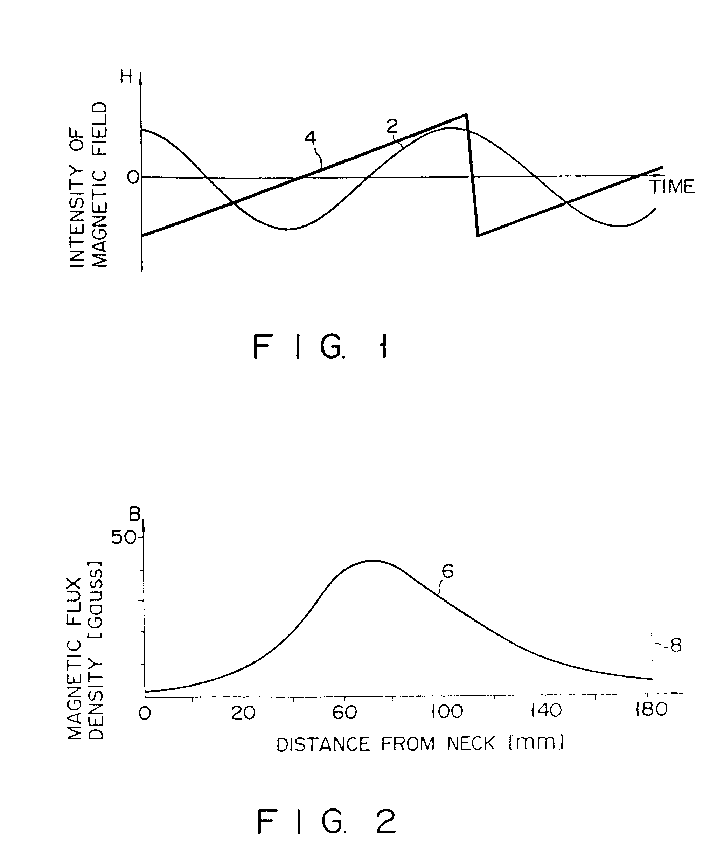

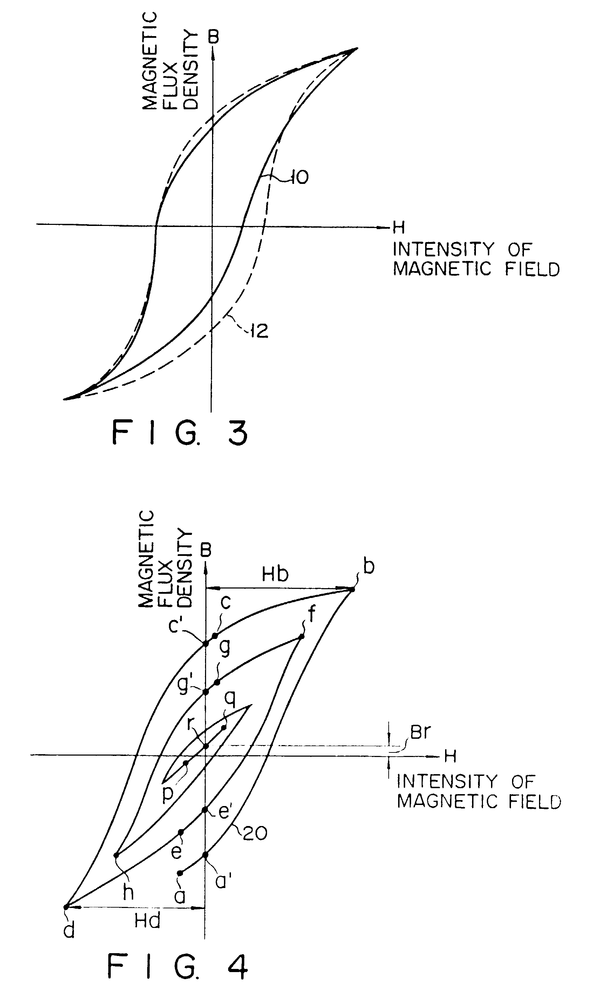

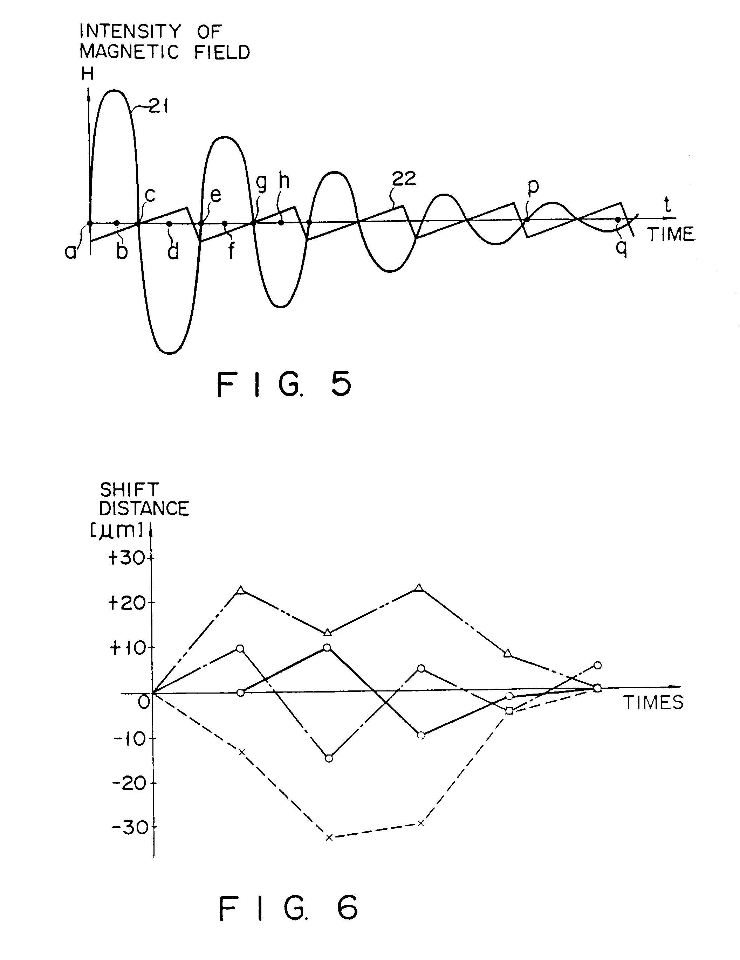

Moreover, magnetized parts of the color cathode ray tube are demagnetized by the degaussing coil supplied with the current whose frequency is the same as the commercial frequency. The frequency of the vertical deflection current is the same as the commercial frequency in most regions in the world. Fig. 1 shows how degaussing magnetic field 2 generated by the transient, attenuating A.C. current and deflection magnetic field 4 generated by the vertical deflection current change with time. As is shown in Fig. 1, degaussing magnetic field 2 and deflection magnetic field 4 have the same frequency. Degaussing magnetic field 2 is shown as being in phase with deflection magnetic field 4, but normally, degaussing magnetic field 2 is not generated in synchronism with deflection magnetic field 4. Therefore, when degaussing magnetic field 2 is applied for the degaussing of the color cathode ray tube, a phase shift is likely to occur between degaussing magnetic field 2 and deflection magnetic field 4. Fig. 2 shows magnetism flux density distribution 6 relating to the vertical deflection magnetic field generated when the deflection coil is supplied with a vertical deflection current. In Fig. 2, magnetic flux densities are plotted against the ordinate and distances measured from the neck are plotted against the abscissa. As is indicated by magnetism flux density distribution curve 6, the magnetic flux density is as high as 5 gausses even at position 8 where the end of the magnetic shield is located. Since, therefore, the degaussing magnetic field and the vertical deflection magnetic field are superimposed on each other in the location of the magnetic shield, a hysteresis loop of a magnetic member applied with both degaussing magnetic field 2 and deflection magnetic field 4 is not symmetric with reference to the origin, and the magnetic shield retains the magnetism arising from the above-mentioned phase shift, even after it is degaussed. Fig. 3 shows hysteresis loop 10 of the magnetic field. As is shown, hysteresis loop 10 of a magnetic member applied with both degaussing magnetic field 2 and deflection magnetic field 4 is transformed or shifted from normal hysteresis loop 12, which is indicated by the broken lines with the reference numeral of "12". Although, in Fig. 3, hysteresis loop 12 is rotation-symmetric with reference to the origin, hysteresis loop 10 is not. Fig. 4 shows a detailed hysteresis curve obtained when a magnetic material is degaussed by applying a degaussing magnetic field thereto. Fig. 5 shows a degaussing magnetic field generated when a degaussing current flows through the degaussing coil, and also shows a vertical deflection magnetic field generated when a vertical deflection current flows through the deflection yoke. The magnetic flux density and magnetic field strength at time $\underline{a}$ in Fig. 5 are indicated at point $\underline{a}$ in Fig. 4, and those at time $\underline{c}$ in Fig. 5 are indicated at point $\underline{c}$ in Fig. 4. Likewise, times $\underline{b}$ and $\underline{d}$-$\underline{h}$ in Fig. 5 correspond to points $\underline{b}$ and $\underline{d}$-$\underline{h}$, respectively.

Otherwise, the magnetic flux density and the magnetic field strength at time $\underline{a}$ in Fig. 5 are indicated at point $\underline{a}'$ in Fig. 4 when the deflection yoke does not generate a vertical deflection magnetic field. Those at time $\underline{c}$ in Fig. 5 are indicated at point $\underline{c}'$ in Fig. 4 when the yoke does not generate the magnetic field. Likewise, times $\underline{e}$, $\underline{g}$ in Fig. 5 correspond to points $\underline{e}'$, $\underline{g}'$, and times $\underline{b}$, $\underline{d}$, $\underline{f}$ and $\underline{h}$ in Fig. 5 correspond to proximate points (not shown) of points $\underline{b}$, $\underline{d}$, $\underline{f}$ and $\underline{h}$ respectively when the yoke does not generate the magnetic field. As a result, the hysteresis curve in Fig. 4 is shifted from a hysteresis curve (not shown) in the case of the magnetic shield applied with only degaussing magnetic field. Shift distance between point $\underline{c}$ and point $\underline{c}'$ is shorter than shift distance between point $\underline{a}$ and point $\underline{a}'$.

Therefore, when magnetic shield is applied with both degaussing magnetic field 21 and vertical deflection magnetic field 22, its hysteresis curve 20 can be represented in the manner indicated in Fig. 4. Accordingly, magnetic field strength Hb at time $\underline{b}$ is greater than magnetic field strength Hd at time $\underline{d}$ since magnetic shield is applied with vertical deflection magnetic field 22. The decrease quantity $\Delta$Hd of magnetic field strength Hd is greater than the decrease quantity $\Delta$Hb of magnetic field strength Hb. Therefore, hysteresis curve 20 is formed asymmetrically shown in Fig. 4. Moreover, the asymmetrical hysteresis curve is shifted in one direction during this degaussing since vertical deflection magnetic field 22 at points $\underline{a}$, $\underline{b}$, $\underline{c}$ and $\underline{d}$ in Fig. 5 are equal to magnetic field 22 at points $\underline{e}$, $\underline{f}$, $\underline{g}$ and $\underline{h}$ respectively. As a result of this degaussing, the hysteresis curve converges at point $\underline{r}$ in Fig. 4, and the remnant magnetism at converging point $\underline{r}$ in Br. In short, the remanent magnetism does not decrease to 0. Since, converging point $\underline{r}$ moves due to the phase difference between the degaussing magnetic field and the vertical deflection magnetic field, remanent magnetism Br varies accordingly.

Fig. 6 shows how the landing point of an electron beam is shifted from its initial landing point on the phosphor screen corner, wherein the initial landing point is obtained when the color cathode ray tube is degaussed at the first time by using the above-mentioned degaussing method, and the other landing point is obtained when the color cathode ray tube is also degaussed at the other time. In Fig. 6, the ordinate represents the distance between the initial landing point and the other landing point, while the abscisa represents how many times the degaussing method has been used. As can be understood from Fig. 6, the maximum shift distance is 33 pm and the average shift distance is 11 pm. Since, as noted above, the remanent magnetism varies in accordance with the phase difference between the degaussing magnetic field and the vertical deflection magnetic field, therefore the distance through which the landing point is shifted varies in accordance with the phase difference.

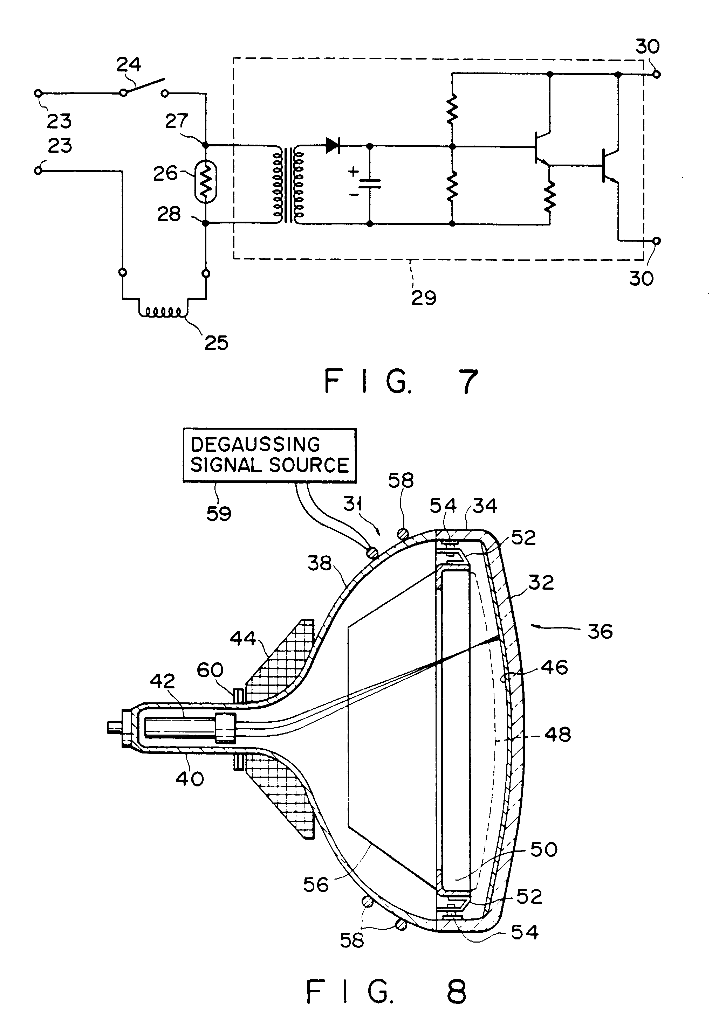

Moreover, a delay circuit for the color cathode ray tube set is shown in Fig. 7. A degaussing circuit is also shown together with the delay circuit in Fig. 7. In the case of this color cathode ray tube, magnetized components are demagnetized by degaussing current having a frequency same as that of power source. Terminal 23 is connected with a power source (not shown). Degaussing coil 25 is connected to terminal 23 at one terminal thereof while to end 28 of positive temperature coefficient thermistor 26 at the other terminal thereof. Other end 27 of positive temperature coefficient thermistor 26 is connected to one end of switch 24. Other end of switch 24 is connected to a power source (not shown) via another terminal 23. Input terminals of delay circuit 29 are connected to both ends 27 and 28 of positive temperature coefficient thermistor 26. Elements of delay circuit 29 are connected to one another as shown in Fig. 7. Delay circuit 29 is connected to output terminals 30. Positive temperature coefficient thermistor is an element whose electric resistance is small when its temperature is almost or about room temperature but whose electric resistance increases when its temperature rises. When switch 24 is turned on, current having a frequency same as that of the power source (not shown) flows from the power source to degaussing coil 25 through thermistor 26. Although current flows to thermistor 26, too, but sufficient current is allowed to flow to the degaussing coil because the temperature of thermistor 26 is low and its electric resistance is small at first. As thermistor 26 generates Joule heat to raise its temperature higher and higher, its electric resistance becomes gradually larger and larger. Current supplied to degaussing coil 25 is thus made smaller and smaller. The strength of degaussing magnetic field generated by degaussing coil 25 becomes smaller and smaller, accordingly. Potential difference becomes large because electric resistance becomes large between both ends 27 and 28 of thermistor 26. Current supplied from the power source (not shown) starts flowing to delay circuit 29. After current is supplied to delay circuit 29, it is applied to the deflection circuit (not shown) connected to terminals 30. Positive temperature coefficient thermistor 26 is being current-supplied under this state and it is therefore generating Joule heat, keeping its temperature high. Current is not supplied to degaussing coil 25 unless the termperature of positive temperature coefficient thermistor 26 becomes low. Thermistor 26 must be naturally cooled to lower its temperature after switch 24 is turned off, for the purpose of degaussing the magnetized components again. It takes some time for thermistor 26 to be cooled. This makes it impossible to often demagnetize. The purity of colors in the color cathode ray tube is reduced accordingly.

Prior art document US-A-4 441 052 discloses a degaussing circuit for installation in a TV-receiver equipped with a remote controller and a switched mode power supply. It particularly refers to a TV-receiver in which the degaussing is performed each time the receiver is turned on. The degaussing current supplied from a main power supply to a degaussing coil fixed around the tube in the vicinity of the shadow mask is controlled by a thermistor which gradually increases in resistance upon heating thus reducing the degaussing current so as to provide a gradually decreasing degaussing magnetic field.

Further prior art document GB-A-1 499 663 describes a circuit for application in a color TV-receiver, which completely inhibits the supply of current to a scanning circuit for a period suffucient to allow degaussing to be effected at switch-on of the receiver. However, according to this prior art circuit a time delay depends on the capacity of a capacitor and is thus set to a predetermined interval.

The object of the present invention is to provide a method of degaussing a color cathode ray tube, high in the color purity and suitable for mass production.
To solve this object of the present invention provides a method of degaussing a color cathode ray tube apparatus as specified in claim 1.

The method of degaussing the color cathode ray tube includes especially a step of applying a degaussing current, which has a frequency same as that of the commercial power source, to the degaussing coil to degauss magnetized components of the tube on condition that the vertically deflecting coils of the deflection yoke is not supplied with a deflecting current.

According to the present invention, the remanent magnetism of those components or members which are made of magnetic material and used for the color cathode ray tube can be sufficiently degaussed.

This invention can be more fully understood from the following detailed description when taken in conjunction with the accompanying drawings, in which:

Fig. 1 is a graph showing the degaussing magnetic field and the vertical deflection magnetic field are generated in a conventional color cathode ray tube;
Fig. 2 is a graph showing how magnetic flux density of a vertical deflection are distributed in the conventional color cathode ray tube;
Fig. 3 shows a hysteresis loop relating to a conventional internal magnetic shield;
Fig. 4 shows a hysteresis curve obtained when the conventional color cathode ray tube is degaussed by use of a conventional method;

Fig. 5 is a graph showing both the degaussing magnetic field and the vertical deflection magnetic field of the conventional color cathode ray tube;

Fig. 6 shows how the landing point of an electron beam is shifted from its initial landing position in the conventional color cathode ray tube;

Fig. 7 is a circuit diagram showing degaussing and delay circuits used for the conventional color cathode ray tube;

Fig. 8 is a vertically sectioned view showing an example of the color cathode ray tube according to the present invention;

Fig. 9 is a perspective view showing an example of the degaussing apparatus according to the present invention;

Fig. 10A is a plan showing another example of the degaussing apparatus according to the present invention; and

Fig. 10B is a sectional view taken along a line A - A' in Fig. 10A.

An embodiment of the present invention will be described with reference to the drawings.

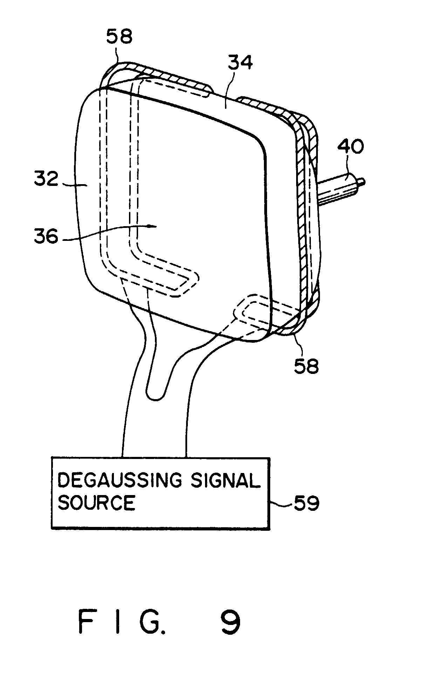

Fig. 8 shows an example of the color cathode ray tube according to the present invention. Color cathode ray tube 31 includes panel section 36 provided with substantially rectangular face plate 32 and skirt 34 projected backward from the rim of face plate 32, funnel section 38 connected to skirt 34 of panel section 36, and neck section 40 continuous from funnel section 38. By panel, funnel and neck sections 36, 38 and 40, the interior of color cathode ray tube 31 is airtightly closed and kept under vacuum. Electron gun assembly 42 for emitting three electron beams is housed in neck section 40. Deflection yoke 44 for generating deflecting magnetic field is contacted with the outer face of funnel and neck sections 38 and 40. Degaussing coil 58 for degaussing magnetic field is located on the outer face of funnel section 38. Degaussing signal source 59 for generating degaussing signal is connected to degaussing coil 58. Degaussing coil and signal source 58 and 59 are also shown in Fig. 9. Magnet 60 for adjusting the color purity is arranged on the outer face of neck section 40. Phosphor screen 46 is formed on the inner face of face plate 32 at panel section 36. Phosphor screen 46 has three kinds of fluorescent layers which are alternately arranged side by side like stripes. When these fluorescent layers are shot by three electron beams, they emit lights of three colors red, green and blue. Rectangular shadow mask 48 facing phosphor screen 46 is arranged in tube 31. Shadow mask 48 is made by a thin metal plate and has a plurality of slits. Shadow mask 48 serves to land the three electron beams emitted from electron gun assembly 42 onto their corresponding fluorescent layers. Mask frame 50 made of metal is arranged round shadow mask 48. Plural elastic supports 52 are welded to mask frame 50. Plural panel pins 54 which are engaged with supports 52 are arranged on the inner face of skirt 34. Internal magnetic shield 56 is provided on that side of frame 50 which is located closer to neck 40, such that the electron beams emitted from electron gun assembly 42 are not under the influence of magnetic field, for example the earth magnetism.

The degaussing method used in the present invention will now be described. Even when the power source for the color cathode ray tube set is switched on, vertically deflecting current is not supplied to the deflection yoke 44. Degaussing signal is supplied at first from degaussing signal source 59 to degaussing coil 58. The degaussing signal is current having a frequency same as that of the commercial power source. No vertically deflecting current is supplied this time to the vertically deflecting coil of deflection yoke 44. Magnetized components of tube 31 can be efficiently degaussed because degaussing signal having the same frequency as that of the commercial power source, for example, 50 Hz is supplied to degaussing coil 58. The supply of degaussing signal to degaussing coil 58 is then stopped and vertically deflecting current is supplied to the deflection yoke 44. Phosphor screen 46 and shadow mask 48 are thus scanned to project images on face plate 32. The electron beams can be landed correctly onto phosphor screen 46 because components such as shadow mask 48 made of magnetic material are sufficiently degaussed. As the result, the picture quality of the color cathode ray tube can be enhanced. Although degaussing coil 58 has been attached to the outer face of funnel section 38 in the case of the above-described example, it may be detachably attached to funnel section 38 so that measurement of colors purity or colors adjustment can be carried out when color cathode ray tube 31 or a television set is completed. Or it may be attached to panel and funnel sections 36 and 38.

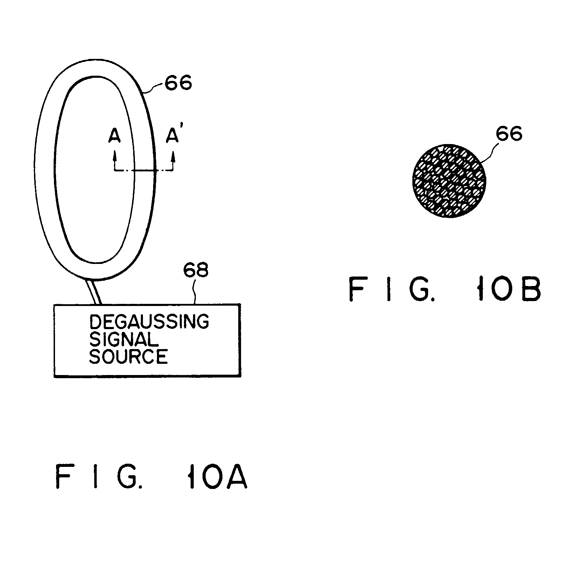

Degaussing coil 58 has been attached to the color cathode ray tube in the above-described case, but movable degaussing coil 66 shown in Figs. 10A and 10B may be used. Degaussing signal source 68 is connected to degaussing coil 66. Degaussing coil 66 is located adjacent to face plate 32 at first and used before measurement and adjustment of colors purity in the color cathode ray tube are carried out. At first the vertically deflecting current is supplied to the vertically deflecting coil of deflection yoke 44 in the color cathode ray tube. Degaussing current having the same frequency as that of the commercial power source is supplied from degaussing signal source 68 to degaussing coil 66 located adjacent to face plate 32. Degaussing coil 66 located adjacent to face plate 32 is gradually separated from the color cathode ray tube. The supply of degaussing signal to degaussing coil 66 is stopped when degaussing coil 66 is located away from face plate 32. Magnetized components such as shadow mask 48 of the color cathode ray tube can be thus sufficiently degaussed. Vertically deflecting current is then applied to deflection yoke 44. This enables the electron beams to be landed correctly onto phosphor screen 46. The picture quality of the color cathode ray tube can be enhanced accordingly.

Although the degaussing method has been described relating to the color cathode ray tube provided with the inner magnetic shield and the shadow mask, it may be applied to the color cathode ray tube including no inner magnetic shield. It may be applied to all of image tubes which include magnetic material at that area where deflecting magnetic field is applied.

According to the present invention, the electron beams can be prevented from mistakenly landing onto the phosphor screen because the remnant magnetism of tube components can be degaussed. This enables that the amount of the electron beams mistakenly landed onto the phosphor screen can be precisely measured without any influence of the remanent magnetism in the tests of picture quality and the like conducted in the course of manufacturing color cathode ray tubes. It can be therefore precisely found whether or not the picture quality of the color cathode ray tube is excellent.

According to the present invention, the remnant magnetism in the color cathode ray tube can be sufficiently demagnetized so that the picture quality of the tube can be made excellent. As the result, a color cathode ray tube, excellent in quality, can be provided.

## Claims

1.  A method of degaussing a color cathode ray tube apparatus during manufacturing of the color cathode ray tube apparatus which has an initial step of manufacturing the cathode ray tube apparatus including a vacuum envelope (36, 38, 40) and a deflection yoke (44) located on the vacuum envelope (36, 38, 40) to deflect electron beams and having vertical and horizontal deflecting coils, said method being characterized by comprising the steps of:

    (a) turning on power to the CRT tube (31);
    (b) initially maintaining a vertical deflecting current of said CRT tube (31) having a frequency in an off state after said turning on power;
    (c) degaussing said CRT tube (31) using a current having a frequency which is the same as a frequency of a commercial power source and the frequency of the vertical deflecting current, while said vertical deflecting current is being maintained in the off state;
    (d) gradually decreasing a degaussing magnetic field by gradually separating a degaussing coil (66) to which the degaussing currents are applied, from the cathode ray tube (31) so that the degaussing magnetic field, generated by the degaussing coil (66) so as to sourround the color cathode ray tube (31), gradually weakens as the degaussing coil (66) gradually moves away from the color cathode ray tube (31);

    (e) subsequent to said decreasing in said step (d), completely turning off said degaussing magnetic field;
    (f) turning on said vertical deflecting current to said vertical deflecting coils of the deflection yoke (44) only after said turning off step (e) is completed; and
    (g) testing a picture quality of said color cathode ray tube apparatus while said vertical deflecting coils are energized.

## Patentansprüche

1.  Verfahren zum Entmagnetisieren eines Farbkathodenstrahlröhren-Gerätes während der Herstellung des Farbkathodenstrahlröhren-Gerätes, wobei die Herstellung einen anfänglichen Schritt des Herstellens des Kathodenstrahlröhren-Gerätes mit einem Vakuumkolben (36, 38, 40) und einem Ablenkjoch (44), das sich am Vakuumkolben (36, 38, 40) befindet, um Elektronenstrahlen abzulenken, und das vertikale und horizontale Ablenkspulen aufweist, umfaßt, wobei das Verfahren dadurch gekennzeichnet ist, daß es die folgenden Schritte aufweist:

    (a) Anschalten der Stromversorgung für die Kathodenstrahlröhre (31);
    (b) anfängliches Halten eines vertikalen Ablenkstromes der Kathodenstrahlröhre (31), der eine Frequenz aufweist, in einem ausgeschalteten Zustand nach dem Anschalten der Stromversorgung;
    (c) Entmagnetisieren der Kathodenstrahlröhre (31) unter Verwendung eines Stromes mit einer Frequenz, die der Frequenz einer technischen Stromquelle und der Frequenz des vertikalen Ablenkstromes entspricht, während der vertikale Ablenkstrom im ausgeschalteten Zustand gehalten wird;
    (d) allmähliches Verringern eines Entmagnetisierungsmagnetfeldes durch allmähliches Entfernen einer Entmagnetisierungsspule (66), der die Entmagnetisierungsströme zugeführt werden, von der Kathodenstrahlröhre (31), so daß das Entmagnetisierungsmagnetfeld, das durch die Entmagnetisierungsspule (66) erzeugt wird, um die Kathodenstrahlröhre (31) zu umgeben, allmählich schwächer wird, wenn die Entmagnetisierungsspule (66) allmählich von der Kathodenstrahlröhre (31) wegbewegt wird;
    (e) komplettes Abschalten des Entmagnetisierungsmagnetfeldes im Anschluß an das Verringern in Schritt (d) ;
    (f) Anschalten des vertikalen Ablenkstromes an die vertikalen Ablenkspulen des Ablenkjochs (44) erst, nachdem der Abschaltschritt (e) abgeschlossen ist; und

(g) Prüfen der Bildqualität des Farbkathodenstrahlröhren-Gerätes, während den vertikalen Ablenkspulen Energie zugeführt wird.

**Revendications**

1. Méthode de démagnétisation d'un appareil à tube cathodique couleur pendant la fabrication de l'appareil à tube cathodique couleur qui comporte une étape initiale de fabrication de l'appareil à tube cathodique comprenant une enveloppe sous vide (36, 38, 40) et un collier de déviation (44) situé sur l'enveloppe sous vide (36, 38, 40) pour dévier les faisceaux électroniques et comportant des bobines de déflexion verticale et horizontale, ladite méthode étant caractérisée en ce qu'elle comprend les étapes consistant à :

    (a) mettre en marche l'alimentation vers le tube cathodique (31) ;
    (b) maintenir initialement un courant de déflexion verticale dudit tube cathodique (31) ayant une fréquence dans un état coupé après ladite mise en marche de l'alimentation ;
    (c) démagnétiser ledit tube cathodique (31) en utilisant un courant ayant une fréquence qui est identique à une fréquence d'une source d'alimentation commerciale et à la fréquence du courant de déflexion verticale, tandis que ledit courant de déflexion verticale est maintenu dans l'état coupé ;
    (d) diminuer graduellement un champ magnétique de démagnétisation en séparant graduellement une bobine de démagnétisation (66) à laquelle les courants de démagnétisation sont appliqués, du tube cathodique (31), de sorte que le champ magnétique de démagnétisation, généré par la bobine de démagnétisation (66) afin d'entourer le tube cathodique couleur (31), s'affaiblisse graduellement alors que la bobine de démagnétisation (66) s'éloigne graduellement du tube cathodique couleur (31)
    (e) à la suite de ladite diminution dans ladite étape (d), couper complètement ledit champ magnétique de démagnétisation ;
    (f) mettre en marche ledit courant de déflexion verticale vers lesdites bobines de déflexion verticale du collier de déviation (44) uniquement une fois que ladite étape de coupure (e) est achevée ; et
    (g) tester une qualité d'image dudit appareil à tube cathodique couleur tandis que lesdites bobines de déflexion verticale sont excitées.

EP 0 335 245 B1

F I G. 1

F I G. 2

8

F I G. 3

F I G. 4

F I G. 5

F I G. 6

FIG. 7

DEGAUSSING SIGNAL SOURCE

FIG. 8

DEGAUSSING SIGNAL SOURCE

F I G. 9

66

A    A'

68

DEGAUSSING
SIGNAL
SOURCE

F I G.   IOA

66

F I G.   IOB